Europäisches Patentamt

European Patent Office

Office européen des brevets

(11) Publication number: **0 317 025 B1**

(12) **EUROPEAN PATENT SPECIFICATION**

(45) Date of publication of patent specification: **21.04.93**  (51) Int. Cl.5: **C08L 95/00**

(21) Application number: **88202562.0**

(22) Date of filing: **15.11.88**

(54) **Bitumen composition.**

(30) Priority: **16.11.87 US 121426**

(43) Date of publication of application:
**24.05.89 Bulletin 89/21**

(45) Publication of the grant of the patent:
**21.04.93 Bulletin 93/16**

(84) Designated Contracting States:
**AT BE CH DE ES FR GB GR IT LI LU NL SE**

(56) References cited:
**GB-A- 1 193 628**
**US-A- 4 391 949**
**US-A- 4 585 816**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Gilmore, Dennis Wayne**
**1311 Rustic Knolls**
**Katy Texas 77450(US)**
Inventor: **Collins, James Henderson**
**16318 Espinosa Drive**
**Houston Texas 77083(US)**
Inventor: **Erickson, James Robert**
**21735 Park Brook Drive**
**Katy Texas 77450(US)**

EP 0 317 025 B1

Rank Xerox (UK) Business Services
(3.10/3.5x/3.0.1)

**Description**

This invention relates to a bitumen composition containing a polymeric modifier.

Bitumen compositions, particularly asphalt compositions, containing one or more polymeric modifiers are, of course, well known in the prior art. In general, the addition of a polymeric modifier to a bitumen composition will improve one or more of the bitumen properties such as penetration, softening point, toughness, tenacity, heat resistance and the like such as taught in Japanese Patent No. Sho 58(1983)-47057. Suitable polymeric additives include: symmetric radial block copolymers comprising arms having diene polymer blocks and vinyl aromatic polymer blocks such as taught in U.S. Patent No. 4,217,259; block copolymers of a monoalkenyl aromatic hydrocarbon monomer and a conjugated diolefin such as taught in U.S. Patent No. 4,585,816 and the patents therein cited; olefin homopolymers and copolymers, particularly 1-butene homopolymers and copolymers, as taught in U.S. Patent No. 3,915,914 and the patents therein cited; and isoolefin homopolymers, particularly polyisobutylene, such as taught in U.S. Patent No. 3,615,830.

It is, of course, well known in the prior art to use asphalt compositions containing polymeric modifiers in the preparation of road surfaces. In general, such road surfaces provide satisfactory service, at least on low traffic roads, for extended periods of time. Failure of such services is, however, inevitable. Failures generally occur through bleeding, fatting up, cracking and chip loss. As is well known, the time until failure varies with several factors such as the amount and weight of traffic and various weather factors such as temperature and rainfall. Unfortunately, failure frequently occurs at shorter time intervals than desired. Such failures are due primarily to the poor toughness and tenacity of the asphalt composition. This is particularly true on heavily traveled roadways. The need, then, for an improved asphalt composition having improved toughness and tenacity thereby extending the time period between failures is believed to be readily apparent. It has now been discovered that the foregoing and other disadvantages of the prior art bitumen compositions can be avoided or at least significantly reduced with the bitumen composition of the present invention and an improved bitumen composition having increased toughness and tenacity provided thereby.

Accordingly, the present invention provides a bitumen composition containing bitumen and from 1 to 20 parts by weight per 100 parts by weight of bitumen of an asymmetric radial block copolymer which comprises i) at least two polymeric arms, each arm containing at least one block of at least 85% monoalkenyl aromatic hydrocarbon polymer and at least one block of at least 85% conjugated diolefin polymer, and ii) at least two arms which are, at least 85%, polymers of one or more conjugated diolefins, the total number of arms i) and ii) being in the range from 4 to 50, and the ratio of the arms i) to ii) being in the range from 5:1 to 1:5; said asymmetric, radial block copolymer having a weight average molecular weight from 600,000 to 2,500,000.

As used herein, the term "predominantly" means that the specified monomer will be the dominant monomeric component (at least 85%) but not necessarily the sole monomeric component. The asymmetric radial block copolymer may be crosslinked after it is incorporated into the bitumen composition.

The asymetric, radial polymers used in the bitumen compositions of this invention may be represented by the following general formula:

$$(A\text{-}B)_x Y (C)_z$$

wherein:

A-B is a block copolymer arm;

A is a monoalkenyl aromatic hydrocarbon polymer block;

B is a conjugated diolefin polymer block which may be at least partially hydrogenated;

C is a conjugated diolefin polymer arm which may contain the same or a different conjugated diolefin as is contained in B and which may be at least partially hydrogenated;

$x + z$ equals a number from 4 to 50, preferably 6 to 30, and especially 8 to 20;

$x/z$ ranges from 5 to 1 to 1 to 5 especially 3 to 1 to 1 to 3; and

y is the residue of a multifunctional coupling agent.

Such asymmetric polymers are described in U.S. Patent Nos. 4,163,764; 4,391,949; 4,444,953 and Canadian Patent No. 997,889.

Monoalkenyl aromatic hydrocarbon monomers useful in preparing the monoalkenyl aromatic hydrocarbon polymer blocks include styrene, alkyl substituted styrenes, paramethyoxystyrene, vinyl naphthalene, vinyl toluene and the like. Conjugated diolefins useful in preparing the conjugated diolefin polymer blocks include the conjugated diolefins having from 4 to about 12 carbon atoms such as 1,3-butadiene, isoprene, piperylene, methylpentadiene, phenylbutadiene, 3,4-dimethyl-1,3-hexadiene, 4,5-diethyl-1,3-octadiene and the like. Preferably the block copolymer arm comprises one block of polystyrene and one block of polybutadiene or polyisoprene, and the diolefin polymer arm is a homopolymer of either butadiene or isoprene.

Suitable asymmetric, radial polymers may be prepared by first preparing a suitable mixture of living polymeric arms and then reacting the mixture with a polyfunctional (multifunctional) coupling agent. As is well known in the prior art, and taught in the above-referenced U.S. patents, the living polymer arms may be prepared via anionic polymerization. The different arms may be prepared separately and then combined, or, in effect, prepared simultaneously by adding additional catalysts or initiator after preparation of the monoalkenyl aromatic hydrocarbon polymer block has been completed and just before the conjugated diolefin block is grown in the block copolymer. Suitable asymmetric, radial polymers may also be prepared by first coupling a plurality of one of the arms and then, in effect, growing the other from the lithium sites incorporated into the nucleus as a result of the initial coupling. This method of preparing asymmetric, radial polymers is taught, for Example, in U.S. Patent Nos. 3,985,830 and 4,108,945.

The asymmetric, radial polymers useful in the bitumen composition of this invention will comprise from about 2 to about 25 block copolymer arms containing at least one monoalkenyl aromatic hydrocarbon polymer block and at least one conjugated diolefin polymer block, and from about 2 to about 25 arms of the conjugated diolefin polymer. Preferably, each of the monoalkenyl aromatic hydrocarbon polymer blocks has a weight average molecular weight within the range from 2,000 to 50,000, especially 3,000 to 30,000 and in particular 10,000 to 25,000; each of the conjugated diolefin polymeric blocks has a weight average molecular weight within the range from 5,000 to 150,000, especially 15,000 to 100,000 and in particular 25,000 to 85,000; and each of the conjugated diolefin polymer arms has a weight average molecular weight within the range from 5,000 to 150,000, especially 15,000 to 100,000 and in particular 25,000 to 85,000. The complete asymmetric, radial polymer useful in the bitumen composition of this invention has a weight average molecular weight within the range from 600,000 to 2,500,000, especially from 750,000 to 1,800,000. It will, therefore, be necessary to control both the number of arms and the molecular weights thereof within the foregoing ranges, so as to insure that the weight average molecular weight of the final polymer, before crosslinking, is within this range. The molecular weight of the several arms need not, of course, be the same. In fact, a useful asymetric, radial polymer could not easily be prepared with all of its arms having molecular weights at or near the lower portion of the foregoing molecular weight ranges. Similarly, a final polymer having more than about 16 arms, each arm having a molecular weight at or near the top of the foregoing molecular weight ranges, would be less effective in the bitumen composition of this invention.

The asymmetric, radial polymer may, but need not, be hydrogenated such that up to about 98% of the residual unsaturation is eliminated from both the conjugated diolefin polymer blocks of the copolymer arms and the conjugated diolefin polymer arms. The hydrogenation will be accomplished selectively such that less than about 5 wt% of the unsaturation contained in the monoalkenyl aromatic hydrocarbon blocks is converted or saturated. In a most preferred embodiment of the invention, the selective hydrogenation is accomplished via the selective hydrogenation technique taught in U.S. Patent No. 3,700,933. When selective hydrogenation is accomplished, care should be exercised to accomplish the hydrogenation in such a manner as to retain sufficient unsaturation to permit sulfur vulcanization if sulfur vulcanization is to also be accomplished in a manner as hereinafter taught.

The bitumen composition of this invention will contain from 1 to 20 parts by weight of asymmetric, radial polymer per 100 parts by weight of bitumen in said composition. Those compositions containing from 1 to 12, especially 3 to 6, parts by weight of asymmetric, radial polymer per 100 parts by weight of bitumen are especially preferred since they exhibit a significant increase in toughness and tenacity, as determined using the Benson method, Instron tester, at 25°C, 50 cm/min pull with a tension head having 2.223 cm diameter, when compared to bitumen compositions comprising the same concentration of a more conventional, prior art polymeric modifier.

In general, any of the natural and synthetic bitumens known in the prior art are suitable for use in the composition of the present invention. Suitable bitumens thus include natural and synthetic asphalts such as native, rock and lake asphalts as well as petroleum asphalts. The bitumen used in the composition may be neat, highly cracked, residual or air blown. In general, bitumens useful in the composition of the present invention will have penetrations (ASTM method D5) within the range from 10 to 800 especially 75 to 400, and softening points within the range from 30°C to 115°C, especially 30°C to 75°C. Petroleum residual asphalts are particularly useful in the composition of the present invention and are, therefore, preferred.

The asymmetric, radial polymer useful in the bitumen compositions of this invention may be combined with the bitumen using any of the methods known heretofore in the prior art for combining such materials. Suitable methods include simple admixture of the components at ambient conditions, admixture with both components in a molten state with agitation and admixtures of solutions of both components. When one or both of the components is admixed in the solid state it will be advantageous to finely divide the solid component or components prior to admixture. Molten phase admixture can be accomplished by heating both components to a temperature above their respective melting points. Solution admixture may be accomplished by dissolving the two components in a suitable solvent, which solvent may be the same or different, and thereafter evaporating the solvent. As indicated more fully hereinafter, admixture of solid polymer components in the molten asphalt phase, suitably at 150°C to 200°C, is generally the most convenient way to combine the components and is, therefore, preferred.

After the asymmetric, radial block copolymer has been incorporated into the bitumen, the composition is preferably sulfur vulcanized using the techniques known in the prior art, such as the method taught in U.S. Patent No. 4,145,322, to further improve various properties of the composition such as both toughness and tenacity. In general, sulfur vulcanization can be accomplished by incorporating from about 0.5 to about 20 mols of elemental sulfur, as $S_8$, per mol of asymmetric radial block copolymer into the preformed bitumen composition and then heating the composition to a temperature within the range from about 160°C to about 180°C. The sulfur vulcanization can be accomplished at essentially any pressure.

As indicated above, the bitumen composition of this invention may comprise other additives. The other additives actually incorporated, will, of course, depend upon the ultimate end use of the composition. For example, if the bitumen composition is to be used as a roofing composition, suitable fillers, pigments, fire retardants and the like may be incorporated. Suitable fillers include asbestos (both as short and long fibers), magnesium silicate, calcium carbonate, micronized silicas, barium sulfate and various hydrated clays. Suitable pigments include carbon black, titanium oxide and the like. Suitable fire retardants include halogenated, particularly chlorinated, elastomers and rubbers. In general, such additives will be used at concentrations well known in the prior art. As another example, the bitumen composition of this invention may be used as a coating for various substrates. Again, suitable fillers, pigments, fire retardants and the like may be incorporated. As a further example, the bitumen composition of this invention may be used to prepare an asphalt concrete composition which in turn will be used as a paving material. As indicated supra, the bitumen composition of this invention is particularly effective when used in a road surface and such use is, therefore, preferred.

In general, asphalt concrete compositions may be prepared simply by combining the bitumen composition of this invention with a suitable aggregate such as chat, sand, screened pebbles, rock and the like, particle size will vary depending upon the particular application in which the asphalt concrete is used. For paving applications, individual authorities have their own specifications which define the aggregate as a mixture of various particle size materials combined such that the void spaces will vary from about 3 to about 25%. A 6% void is generally considered normal for most highway and street paving applications. In general, an asphalt concrete within the scope of this invention will comprise from 4 to 10, especially 5 to 7, wt% of a bitumen composition within the scope of this invention and from 96 to 90, especially 95 to 93, wt% aggregate. Such an asphalt composition would then comprise from 3.3 to 9.96, especially 4.7 to 6.8, wt% bitumen, from about 0.04 to about 1.7, especially 0.15 to 0.4, wt% asymmetric, radial polymer. Asphalt concrete compositions may be prepared according to any of the techniques well known in the prior art, such as the methods summarized in U.S. Patent No. 4,217,259.

The invention is illustrated in the following Examples.

EXAMPLE 1

In this example, a series of asphalt compositions were prepared using different block copolymers, one of which was within the scope of this invention, or different block copolymer mixtures. With one exception, the asphalt compositions were prepared with both vulcanized and unvulcanized polymers. In those blends when the polymer was vulcanized, elemental sulfur was added to the asphalt composition after it was formed and the asphalt composition containing the sulfur was held at a temperature within the range from about 160°C to about 180°C for one hour. Certain of the asphalt compositions were prepared using polymer/oil blends. In these cases, the amount of the polymer/oil blend actually used was adjusted such that the amount of polymer incorporated into each the asphalt compositions remained constant at three percent by weight, of polymer/asphalt blend. All of the asphalt compositions were prepared with an AC-5 asphalt cement. The first of the asphalt compositions prepared in this example was prepared with a block copolymer comprising a single block of polystyrene having a molecular weight of about 15,000 and a single block of polybutadiene having a molecular weight of about 35,000. After preparation of the asphalt composition, two moles of sulfur, as $S_8$, per mole of polymer was added to the asphalt composition and the composition held at a temperature within the range from about 160°C to about 180°C for one hour. For convenience, this asphalt composition is hereinafter identified as composition 1. The second and third asphalt compositions were prepared with a tapered diblock polymer having a weight average molecular weight within the range from about 50,000 to about 70,000 and containing a single block of polybutadiene and a single block of styrene. In the first of these two compositions, identified hereinafter as composition 2A, the polymer was used neat. In the second of these compositions, two moles of elemental sulfur, as $S_8$, per mol of polymer, was added to the asphalt composition after preparation and the composition containing the elemental sulfur was held at a temperature within the range from about 160°C to about 180°C for one hour. For convenience, this composition is hereinafter identified as 2B. The fourth and fifth bitumen compositions tested in this example were prepared with a triblock polymer having terminal blocks of polystyrene, each having a molecular weight of about 18,000 and an intermediate block of polybutadiene having a weight average molecular weight of about 70,000. As used, the polymer was combined with an equal amount of oil and in both of the bitumen compositions the oil polymer mixture was added to the asphalt in an amount of 6% by weight of oil/polymer/asphalt blend so as to produce a blend containing 3 wt% polymer. In the first of these two bitumen compositions, the polymer was used neat. In the second of these bitumen compositions, after the polymer was dissolved in the asphalt, two moles of elemental sulfur, as $S_8$, was added to the blend and the blend held at a temperature within the range from about 160°C to about 180°C for one hour. For convenience, these two bitumen compositions are identified as compositions 3A and 3B, respectively. The sixth, seventh and eighth bitumen compositions tested in this example were prepared with a blend of polymers comprising a diblock identical to that used in bitumen composition 1 and a triblock identical to that used in bitumen compositions 3A and 3B. The polymeric blend, as used, contained an equal weight of an oil. In the first of these three bitumen compositions, the polymer mixture was used neat. In the second of these compositions, two moles of sulfur, as $S_8$, per mole of polymer was added to the bitumen composition and in the third composition, five moles of sulfur, as $S_8$, per mole of polymer was added. Both of the compositions to which sulfur was added were held at a temperature within the range from about 160°C to about 180°C for one hour. For convenience, these blends are identified hereinafter as 4A, 4B and 4C, respectively. The ninth and tenth bitumen compositions tested in this example, were prepared with an asymmetric, radial polymer within the scope of the present invention. On average, the asymmetric, radial polymer used contained 12 block copolymer arms each containing a single polystyrene block having a molecular weight of 11,000 and a polyisoprene block having a weight average molecular weight of 60,000 and 6 arms which were homopolymers of isoprene having a weight average molecular weight of 70,000. The average number of total arms (18) was determined using GPC-LALLS. The ratio, on average, of twelve copolymer arms to six homopolymer arms was determined by assuming that this ratio would be the same as it was in the blend of polymer arms prior to coupling with divinylbenzene. In the first of the bitumen compositions prepared in accordance with this invention, the asymmetric, radial polymer was used neat. In the second of these bitumen compositions, six moles of elemental sulfur, as $S_8$, per mole of polymer was added to the bitumen composition after preparation and the composition containing the sulfur was held at a temperature within the range from about 160°C to about 180°C for one hour. For convenience, these bitumen compositions are hereinafter referred to as compositions 5A and 5B, respectively. The eleventh and twelfth bitumen compositions tested in this example were prepared with a diblock polymer identical to that used in bitumen composition 1. In both of these compositions, the diblock polymer was used as a blend containing 20 wt% naphthenic oil. In the eleventh and twelfth bitumen compositions, the polymer oil blend was added to the asphalt in an amount of 3.75 wt% based on polymer-oil asphalt blend so as to produce an asphalt composition containing 3 wt% polymer in the blend. In the first of these compositions, the polymer was used neat. In the second of these compositions, after the bitumen composition was prepared, two moles of elemental sulfur, as $S_8$, per mole of polymer was added to the composition and the resulting mixture held at a temperature within the range from about 160°C to about 180°C for one hour. For convenience, these bitumen compositions are identified hereinafter as compositions 6A and 6B, respectively. The 13th bitumen composition tested in this example was identical to the eleventh and twelfth compositions (6A and 6B) except that an aromatic oil was used in place of the naphthenic oil. For convenience, the 13th composition is identified as composition 7. The fourteenth and fifteenth bitumen compositions tested in this Example were prepared with an asymmetric, radial polymer having two styrene-butadiene block copolymer arms and two butadiene homopolymer arms. The molecular weight of the styrene blocks was about 20,000 while the molecular weight of the butadiene blocks and the butadiene homopolymer arms was about 36,000. The molecular weight of this asymmetric radial polymer was, then, well below that required for the asymmetric, radial polymer useful in the bitumen compositions of this invention. In the first of these bitumen compositions, the polymer was used neat. In the second of these bitumen compositions, the polymer was sulfur vulcanized after it was incorporated into the bitumen composition. For convenience, the fourteenth and fifteenth bitumen compositions are hereinafter referred to as compositions 8A and 8B, respectively. The sixteenth and seventeenth bitumen compositions tested in this Example were prepared with asymmetric, radial polymer having four styrene-butadiene block copolymer arms. The molecular weight of the styrene blocks was about 20,000 and the molecular weight of the butadiene blocks was about 40,000. In the first of these compositions, the polymer was used neat and in the second of these compositions the polymer was sulfur vulcanized. For convenience, these compositions are hereinafter respectively referred to as compositions 9A and 9B. The eighteenth and nineteenth bitumen compositions tested in this Example were prepared with a symmetric, radial polymer identical to that used in compositions 9A and 9B except that the molecular weight of the styrene blocks was 12,000 rather than 20,000. Again, the polymer was used neat in the first of these compositions and was sulfur vulcanized in the second of these compositions. For convenience, these compositions are hereinafter referred to, respectively, as compositions 10A and 10B. The twentieth and twenty-first compositions tested in this Example were prepared with a styrene-isoprene-styrene linear triblock copolymer. The styrene blocks each had molecular weights of about 10,000 and the molecular weight of the isoprene block was about 100,000. In the first of these compositions, the polymer was used neat and in the second of these compositions the polymer was sulfur vulcanized after incorporation into the bitumen composition. For convenience, these compositions are hereinafter, respectively, referred to as compositions 11A and 11B. All of the asphalt compositions tested in this example were prepared by mixing in a Silverson LDD laboratory mixer equipped with a 2.5 cm. tubular general purpose disintegrating head turning at 3,000 rpm. Each of the asphalt compositions was prepared at 160°C and the time required to dissolve the polymer in the asphalt was determined. After preparation, each of the asphalt compositions were then tested to determine its penetration at 25°C using ASTM Method D5, to determine its ring and ball softening point in °C using ASTM D-36, and to determine its toughness and tenacity using the Benson method with an Instron Tester, at 250°F, 50 cm/min pull. The tension head used in these tests were 2.223 cm diameter. The type or mode of failure was also determined. The results obtained with each of the compositions as well as other information is summarized in the table below. For comparision purposes, the asphalt used in preparing all of the asphalt compositions was analyzed, without any additives, and the values obtained for the asphalt alone are summarized as asphalt composition 12.

TABLE I

| Asphalt Composition No. | Time to Dissolution, min. | Penetration at 25°C, dmm | Ring and Ball Softening Point, °C | Toughness Kg-cm | Tenacity Kg-cm | # Arms | Were Arms Dissimilar | Failure Mode |
|---|---|---|---|---|---|---|---|---|
| 1 | 20-25 | 106 | 54 | 89 | 53 | 1 | - | Cohesive |
| 2A | 60-65 | 114 | 51 | 57 | 16 | 1 | - | Cohesive |
| 2B | 60-65 | 108 | 52 | 73 | 39 | 1 | - | Cohesive |
| 3A | 5-10 | 112 | 51 | 73 | 48 | 2 | No | Cohesive |
| 3B | 5-10 | 113 | 54 | 143 | 112 | 2 | No | Cohesive |
| 4A | 5-10 | 115 | 50 | 99 | 68 | 1.5 | No | Cohesive |
| 4B | 5-10 | 101 | 66 | 148 | 116 | 1.5 | No | Cohesive |
| 4C | 5-10 | 77 | 61 | 78 | 46 | 1.5 | No | Cohesive |
| 5A | 10-15 | 91 | 57 | 150 | 124 | 18 | Yes | Cohesive |
| 5B | 10-15 | 116 | 57 | 237 | 204 | 18 | Yes | Cohesive |
| 6A | 20-25 | 120 | 51 | 58 | 27 | 1 | | |
| 6B | 20-25 | 123 | 55 | 81 | 47 | 1 | - | Cohesive |
| 7 | 5-10 | 101 | 51 | 69 | 43 | 1 | - | Cohesive |
| 8A | 20-25 | 109 | - | 74 | 36 | 4 | Yes | Cohesive |

TABLE I (Continued)

| Asphalt Composition No. | Time to Dissolution, min. | Penetration at 25°C, dmm | Ring and Ball Softening Point, °C | Toughness Kg-cm | Tenacity Kg-cm | # Arms | Were Arms Dissimilar | Failure Mode |
|---|---|---|---|---|---|---|---|---|
| 8B | 20-25 | 90 | - | 79 | 47 | 4 | Yes | Cohesive |
| 9A | 100-130 | 91 | - | 183 | 144 | 4 | No | Adhesive |
| 9B | 100-130 | 87 | - | 128 | 96 | 4 | No | Adhesive |
| 10A | 60-65 | - | - | 70 | 38 | 4 | No | Cohesive |
| 10B | 60-65 | - | - | 104 | 70 | 4 | No | Adhesive |
| 11A | 20-25 | - | - | 124 | 87 | 2 | No | Cohesive |
| 11B | 20-25 | - | - | 110 | 69 | 2 | No | Cohesive |
| 12 | | 127 | 47 | 30 | 6 | | No | Cohesive |

As will be apparent from the data summarized in the preceding table, inclusion of sulfur into the asphalt composition generally improves both the toughness and tenacity of the resulting asphalt composition (B v. A), except with compositions 9A and 9B and 11A and 11B. Too much sulfur, however, is apparently detrimental (cf. 4C v. 4B). As will also be apparent from the data summarized in the preceding table, the composition within the scope of the present invention wherein the asymmetric, radial polymer was used

8

neat gave toughness and tenacity values equal to or better than the values obtained for those compositions containing vulcanized di- and triblock polymers (cf. 5A v. 1, 2B, 3B, 4B, 6B, 8B, 9B, 10B and 11B). Moreover, vulcanization of the asymmetric, radial polymer significantly improved both the toughness and tenacity of the asphalt composition (cf. 5B). As will also be apparent from the data summarized in the preceding Table, the lower molecular weight asymmetric radial polymer used in Compositions 9A and 9B gave good results when used neat but unsatisfactory result after sulfur vulcanization.

EXAMPLE 2

In this Example, four bitumen compositions were prepared wherein a polymeric modifier was incorporated at a concentration of 12 wt% based on the polymer/asphalt blend. The first and second compositions, hereinafter referred to, respectively, as Compositions 13A and 13B, were prepared with an asymmetric, radial polymer within the scope of this invention and identical to the polymer used in Compositions 5A and 5B of Example 1. In the first of these compositions, the polymer was used neat (without sulfur curing) while in the second of these compositions, the polymer was sulfur vulcanized in the same manner as was used in Example 1 by incorporating 2 moles of elemental sulfur, as $S_8$, per mole of polymer into the composition. The third and fourth compositions, hereinafter referred to as Compositions 14A and 14B were prepared, with a block copolymer identical to that used in Composition 1 of Example 1. In the first of these compositions, the polymer was used neat while in the second of these compositions, the polymer was sulfur vulcanized in the same manner as was used in vulcanizing the polymers in certain of the compositions of Example 1 by adding 2 mols of sulfur, as $S_8$, per mole of polymer to the composition. Each of the compositions were prepared in the same manner as was used in preparation of the compositions of Example 1. The asphalt used in each composition was identical to that used in the compositions of Example 1. After preparation, each of the asphalt compositions were tested to determine the penetration at 25°C and the ring and ball softening point in °C using the same test procedures as were used in Example 1. Each composition was also tested to determine its tensile strength in pascals using ASTM D412. The results obtained with each composition are summarized in the following Table:

9

TABLE

| Composition No. | Penetration at 25°C, dmm | Ring and Ball Softening Point, °C | Tensile Strength, KPa |
|---|---|---|---|
| 13A | 58 | 178 | 151.7 |
| 13B | 71 | 182 | 292 |
| 14A | 111 | 191 | 185.6 |
| 14B | 74 | 197 | 324 |

As will be apparent from the data summarized in the foregoing Table, the tensile strength of the compositions containing unvulcanized (neat) polymer as well as the tensile strength of the compositions containing vulcanized polymer are approaching the same values. This is, of course, in contrast to the significant difference exhibited with compositions containing only 3 wt% polymer in the polymer/asphalt blend as reflected by the toughness and tenacity value obtained in Example 1 (compare compositions 1

10

EP 0 317 025 B1

and 5B). It follows from this that maximum improvement is realized when the asymmetric, radial polymer is used in compositions at concentrations more commonly used in road paving compositions.

**Claims**

**Claims for the following Contracting States : AT, BE, CH, DE, FR, GB, GR, IT, LI, LU, NL, SE**

1. A bitumen composition containing bitumen and from 1 to 20 parts by weight per 100 parts by weight of bitumen of an asymmetric, radial block copolymer which comprises i) at least two polymeric arms, each arm containing at least one block of at least 85% monoalkenyl aromatic hydrocarbon polymer and at least one block of at least 85% conjugated diolefin polymer which may be at least partially hydrogenated, and ii) at least two arms which are, at least 85%, polymers of one or more conjugated diolefins which may be at least partially hydrogenated, the total number of arms i) and ii) being in the range from 4 to 50, and the ratio of the arms i) to ii) being in the range from 5:1 to 1:5; said asymmetric, radial block copolymer having a weight average molecular weight from 600,000 to 2,500,000.

2. The bitumen composition of claim 1 wherein the asymmetric, radial block copolymer comprises from 2 to 25 block copolymer arms i), and from 2 to 25 conjugated diolefin polymer arms ii).

3. The bitumen composition of claim 2 wherein the asymmetric, radial block copolymer comprises from 8 to 20 total arms and the ratio of block copolymer arms i) to conjugated diolefin polymer arms ii) is within the range from 3:1 to 1:3.

4. The bitumen composition of claim 1, 2 or 3 wherein said monoalkenyl aromatic hydrocarbon is styrene.

5. The bitumen composition of any one of the preceding claims wherein said polymeric block of a conjugated diolefin is a block of polybutadiene or polyisoprene.

6. The bitumen composition of any one of the preceding claims wherein said conjugated diolefin polymer is a homopolymer of butadiene or isoprene.

7. The bitumen composition of any one of the preceding claims wherein the monoalkenyl aromatic hydrocarbon polymer block has a weight average molecular weight within the range from 2,000 to 50,000, the conjugated diolefin polymer blocks have a weight average molecular weight within the range from 5,000 to 150,000, and the conjugated diolefin polymer has a weight average molecular weight within the range from 5,000 to 150,000.

8. The bitumen composition of any one of the preceding claims wherein the asymmetric, radial block copolymer has a weight average molecular weight within the range from 750,000 to 1,800,000.

9. The bitumen composition of any one of the preceding claims wherein the asymmetric, radial block copolymer is sulfur vulcanized.

10. The bitumen composition of any one of the preceding claims wherein the asymmetric, radial block copolymer is present in the bitumen composition at a concentration within the range from 1 to 12 parts by weight, per 100 parts by weight of bitumen.

11. An asphalt concrete composition comprising from 4 to 10 wt% of a bitumen composition as claimed in any one of the preceding claims, and from 90 to 96 wt% aggregate.

**Claims for the following Contracting State : ES**

1. A process far the preparation of a bitumen composition which process comprises mixing bitumen and from 1 to 20 parts by weight per 100 parts by weight of bitumen of an asymmetric, radial block copolymer which comprises i) at least two polymeric arms, each arm containing at least one block of at least 85% monoalkenyl aromatic hydrocarbon polymer and at least one block of at least 85% conjugated diolefin polymer which may be at least partially hydrogenated, and ii) at least two arms which are, at least 85%, polymers of one or more conjugated diolefins which may be at least partially

11

hydrogenated, the total number of arms i) and ii) being in the range from 4 to 50, and the ratio of the arms i) to ii) being in the range from 5:1 to 1:5; said symmetric, radial block copolymer having a weight average molecular height from 600,000 to 2,500,000.

2. The process according to claim 1 wherein the asymmetric, radial block copolymer comprises from 2 to 25 block copolymer arms i), and from 2 to 25 conjugated diolefin polymer arms ii).

3. The process according to claim 2 wherein the asymmetric, radial block copolymer comprises from 8 to 20 total arms and the ratio of block copolymer arms i) to conjugated diolefin polymer arms ii) is within the range from 3:1 to 1:3.

4. The process of claim 1, 2 or 3 wherein said monoalkenyl aromatic hydrocarbon is styrene.

5. The process of any one of the preceding claims wherein said polymeric block of a conjugated diolefin is a block of polybytadiene or polyisoprene.

6. The process of any one of the preceding claims wherein said conjugated diolefin polymer is a homopolymer of butadiene or isoprene.

7. The process of any one of the preceding claims wherein the monoalkenyl aromatic hydrocarbon polymer block has a weight average molecular weight within the range from 2,000 to 50,000, the conjugated diolefin polymer blocks have a weight average molecular weight within the range from 5,000 to 150,000, and the conjugated diolefin polymer has a weight average molecular weight within the range from 5,000 to 150,000.

8. The process of any one of the preceding claims wherein the asymmetric, radial block copolymer has a weight average molecular weight within the range from 750,000 to 1,800,000.

9. The process of any one of the preceding claims wherein the asymmetric, radial block copolymer is sulfur vulcanized.

10. The process of any one of the preceding claims wherein the asymmetric, radial block copolymer is present in the bitumen composition at a concentration within the range from 1 to 12 parts by weight, per 100 parts by weight of bitumen.

11. A process for the preparation of an asphalt concrete composition, which process comprises mixing 4 to 10 wt% of a bitumen composition prepared according to the process of any one of the preceding claims, with 90 to 96 wt% aggregate.

**Patentansprüche**
**Patentansprüche für folgende Vertragsstaaten : AT, BE, CH, DE, FR, GB, GR, IT, LI, LU, NL, SE**

1. Bitumenzusammensetzung mit einem Gehalt an Bitumen und an 1 bis 20 Gew.-Teilen je 100 Gew.-Teile Bitumen an einem asymmetrischen radialen Blockcopolymer, das i) wenigstens zwei polymere Arme, wobei jeder Arm wenigstens einen Block aus wenigstens 85 % monoalkenylaromatischem Kohlenwasserstoffpolymer und wenigstens einen Block aus wenigstens 85 % konjugiertem Diolefinpolymer, das wenigstens teilweise hydriert sein kann, enthält, und ii) wenigstens zwei Arme umfaßt, die zu wenigstens 85 % Polymere eines oder mehrerer konjugierter Diolefine sind, die wenigstens teilweise hydriert sein können, wobei die Gesamtanzahl der Arme in i) und ii) im Bereich von 4 bis 50 liegt und das Verhältnis der Arme i) zu ii) im Bereich von 5:1 bis 1:5 liegt; wobei das genannte asymmetrische radiale Blockcopolymer ein gewichtsmittleres Molekulargewicht von 600.000 bis 2,500.000 aufweist.

2. Bitumenzusammensetzung nach Anspruch 1, worin das asymmetrische radiale Blockcopolymer 2 bis 25 Blockcopolymerarme i) und 2 bis 25 konjugierte Diolefinpolymerarme ii) umfaßt.

3. Bitumenzusammensetzung nach Anspruch 2, worin das asymmetrische radiale Blockcopolymer 8 bis 20 Gesamtarme umfaßt und das Verhältnis der Blockcopolymerarme i) zu den konjugierten Diolefinpolymerarmen ii) im Bereich von 3:1 bis 1:3 liegt.

**4.** Bitumenzusammensetzung nach Anspruch 1, 2 oder 3, worin der monoalkenylaromatische Kohlenwasserstoff Styrol ist.

**5.** Bitumenzusammensetzung nach einem der vorstehenden Ansprüche, worin der Polymerblock aus einem konjugierten Diolefin ein Polybutadien- oder Polyisoprenblock ist.

**6.** Bitumenzusammensetzung nach einem der vorstehenden Ansprüche, worin das konjugierte Diolefinpolymer ein Butadien- oder Isoprenhomopolymer ist.

**7.** Bitumenzusammensetzung nach einem der vorstehenden Ansprüche, worin der monoalkenylaromatische Kohlenwasserstoffpolymerblock ein gewichtsmittleres Molekulargewicht im Bereich von 2.000 bis 50.000 aufweist, die konjugierten Diolefinpolymerblöcke ein gewichtsmittleres Molekulargewicht im Bereich von 5.000 bis 150.000 haben und das konjugierte Diolefinpolymer ein gewichtsmittleres Molekulargewicht im Bereich von 5.000 bis 150.000 aufweist.

**8.** Bitumenzusammensetzung nach einem der vorstehenden Ansprüche, worin das asymmetrische radiale Blockcopolymer ein gewichtsmittleres Molekulargewicht im Bereich von 750.000 bis 1,800.000 aufweist.

**9.** Bitumenzusammensetzung nach einem der vorstehenden Ansprüche, worin das asymmetrische radiale Blockcopolymer mit Schwefel vulkanisiert ist.

**10.** Bitumenzusammensetzung nach einem der vorstehenden Ansprüche, worin das asymmetrische radiale Blockcopolymer in der Bitumenzusammensetzung in einer Konzentration im Bereich von 1 bis 12 Gewichtsteilen je 100 Gewichtsteile Bitumen vorliegt.

**11.** Asphaltbetonzusammensetzung mit einem Gehalt an 4 bis 10 Gew.-% einer Bitumenzusammensetzung, wie in einem der vorstehenden Ansprüche beansprucht, und mit 90 bis 96 Gew.-% Aggregat.

**Patentansprüche für folgenden Vertragsstaat : ES**

**1.** Verfahren zur Herstellung einer Bitumenzusammensetzung, welches Verfahren ein Vermischen von Bitumen mit 1 bis 20 Gewichtsteilen je 100 Gewichtsteile Bitumen an einem asymmetrischen radialen Blockcopolymer umfaßt, welches Copolymer i) wenigstens zwei polymere Arme, wobei jeder Arm wenigstens einen Block aus wenigstens 85 % monoalkenylaromatischem Kohlenwasserstoffpolymer und wenigstens einen Block aus wenigstens 85 % konjugiertem Diolefinpolymer, das wenigstens teilweise hydriert sein kann, enthält, und ii) wenigstens zwei Arme umfaßt, die zu wenigstens 85 % Polymere eines oder mehrerer konjugierter Diolefine sind, die wenigstens teilweise hydriert sein können, wobei die Gesamtanzahl der Arme in i) und ii) im Bereich von 4 bis 50 liegt und das Verhältnis der Arme i) zu ii) im Bereich von 5:1 bis 1:5 liegt; wobei das genannte asymmetrische radiale Blockcopolymer ein gewichtsmittleres Molekulargewicht von 600.000 bis 2,500.000 aufweist.

**2.** Verfahren nach Anspruch 1, worin das asymmetrische radiale Blockcopolymer 2 bis 25 Blockcopolymerarme i) und 2 bis 25 konjugierte Diolefinpolymerarme ii) umfaßt.

**3.** Verfahren nach Anspruch 2, worin das asymmetrische radiale Blockcopolymer 8 bis 20 Gesamtarme umfaßt und das Verhältnis der Blockcopolymerarme i) zu den konjugierten Diolefinpolymerarmen ii) im Bereich von 3:1 bis 1:3 liegt.

**4.** Verfahren nach Anspruch 1, 2 oder 3, worin der monoalkenylaromatische Kohlenwasserstoff Styrol ist.

**5.** Verfahren nach einem der vorstehenden Ansprüche, worin der Polymerblock aus einem konjugierten Diolefin ein Polybutadien- oder Polyisoprenblock ist.

**6.** Verfahren nach einem der vorstehenden Ansprüche, worin das konjugierte Diolefinpolymer ein Butadien- oder Isoprenhomopolymer ist.

**7.** Verfahren nach einem der vorstehenden Ansprüche, worin der monoalkenylaromatische Kohlenwasserstoffpolymerblock ein gewichtsmittleres Molekulargewicht im Bereich von 2.00 bis 50.000 aufweist, die konjugierten Diolefinpolymerblöcke ein gewichtsmittleres Molekulargewicht im Bereich von 5.000 bis 150.000 haben und das konjugierte Diolefinpolymer ein gewichtsmittleres Molekulargewicht im Bereich von 5.000 bis 150.000 aufweist.

**8.** Verfahren nach einem der vorstehenden Ansprüche, worin das asymmetrische radiale Blockcopolymer ein gewichtsmittleres Molekulargewicht im Bereich von 750.000 bis 1,800.000 aufweist.

**9.** Verfahren nach einem der vorstehenden Ansprüche, worin das asymmetrische radiale Blockcopolymer mit Schwefel vulkanisiert ist.

**10.** Verfahren nach einem der vorstehenden Ansprüche, worin das asymmetrische aradiale Blockcopolymer in der Bitumenzusammensetzung in einer Konzentration im Bereich von 1 bis 12 Gewichtsteilen je 100 Gewichtsteile Bitumen vorliegt.

**11.** Verfahren zur Herstellung einer Asphaltbetonzusammensetzung, welches Verfahren ein Vermischen von 4 bis 10 Gew.-% einer Bitumenzusammensetzung, hergestellt nach dem Verfahren eines der vorstehenden Ansprüche, mit 90 bis 96 Gew.-% Aggregat umfaßt.

**Revendications**

**Revendications pour les Etats contractants suivants : AT, BE, CH, DE, FR, GB, GR, IT, LI, LU, NL, SE**

**1.** Une composition de bitume renfermant du bitume et de une à 20 parties en poids pour 100 parties en poids de bitume, un copolymère séquencé radial asymétrique qui comporte (i) au moins 2 bras polymère, chaque bras renfermant au moins une séquence d'au moins 85% d'un polymère hydrocarboné monoalcényl aromatique et au moins une séquence d'au moins 85% d'un polymère dioléfinique conjugué, qui peut être au moins partiellement hydrogéné, et ii) au moins deux bras qui sont, au moins pour 85%, des polymères d'une ou de plus d'une dioléfine conjuguée, qui peut être au moins partiellement hydrogéné, le nombre total de bras i) et ii) se situant dans la gamme de 4 à 50, et le rapport des bras i) à ii) se situant dans la gamme 5:1 à 1:5; ledit polymère séquencé radial asymmétrique, présentant un poids moléculaire moyenne en poids de 600.000 à 2.500.000.

**2.** La composition de bitume selon la revendication 1, dans laquelle le copolymère séquencé radial asymmétrique comporte de 2 à 25 bras de copolymère séquencé i), et de 2 à 25 bras de polymère dioléfinique conjugué ii).

**3.** La composition de bitume de la revendication 2, dans laquelle le copolymère séquencé radial asymmétrique comporte de 8 à 20 bras au total et le rapport des bras de copolymère séquencé i) aux bras de polymère dioléfinique conjugué ii) se situe dans la gamme de 3:1 à 1:3.

**4.** La composition de bitume de la revendication 1, 2 ou 3, dans laquelle ledit hydrocarbone aromatique monoalcénylé est le styrène.

**5.** La composition de bitume de l'une quelconque des revendications précédentes, dans laquelle ladite séquence polymère d'une dioléfine conjuguée est une séquence de polybutadiène ou de polystyrène.

**6.** La composition de bitume de l'une quelconque des revendications précédentes, dans laquelle ledit polymère dioléfinique conjugué est un homopolymère du butadiène ou d'isoprène.

**7.** La composition de bitume de l'une quelconque des revendications précédentes, dans laquelle la séquence de polymère à base d'hydrocarbone aromatique monoalcénylé présente un poids moléculaire moyen en poids se situant dans la gamme de 2.000 à 50.000, les séquences de polymère dioléflnique conjugué ont un poids moléculaire moyen en poids se situant dans la gamme de 5.000 à 150.000, et le polymère dioléfine conjugué présente un poids moléculaire moyen en poids se situant dans la gamme de 5.000 à 150.000.

**8.** La composition de bitume de l'une quelconque des revendications précédentes, dans laquelle le copolymère séquencé radial asymétrique possède un poids moléculaire moyen en poids se situant dans la gamme de 750.000 à 1.800.000.

EP 0 317 025 B1

9. La composition de bitume de l'une quelconque des revendications précédentes, dans laquelle le copolymère séquencé radial asymmétrique est vulcanisé au soufre.

10. La composition de bitume de l'une quelconque des revendications précédentes, dans laquelle le copolymère séquencé radial asymmétrique est présent dans la composition de bitume selon une concentration se situant dans la gamme de 1 à 12 parties en poids, pour 100 parties en poids de bitume.

11. Une composition de béton asphaltique comportant de 4 à 10% en poids d'une composition de bitume telle que revendiquée dans l'une quelconque des revendications précédentes, et de 90 à 96% en poids d'aggrégat.

**Revendications pour l'Etat contractant suivant : ES**

1. Un procédé pour la préparation d'une composition de bitume, procédé dans lequel on mélange du bitume et de 1 à 20 parties en poids pour 100 parties en poids de bitume, un copolymère séquencé radial asymmétrique qui comporte (i) au moins 2 bras polymère, chaque bras renfermant au moins une séquence d'au moins 85% d'un polymère hydrocarboné monoalcényl aromatique et au moins une séquence d'au moins 85% d'un polymère dioléfinique conjugué, et ii) au moins deux bras qui sont, au moins pour 85%, des polymères d'une ou de plus d'une dioléfine conjuguée, le nombre total de bras i) et ii) se situant dans la gamme de 4 à 50, et le rapport des bras i) à ii) se situant dans la gamme 5:1 à 1:5; ledit polymère séquencé radial asymmétrique, présentant un poids moléculaire moyenne en poids de 600.000 à 2.500.000.

2. Le procédé selon la revendication 1, dans lequel le copolymère séquencé radial asymmétrique comporte de 2 à 25 bras de copolymère séquencé i), et de 2 à 25 bras de polymère dioléfinique conjugué ii).

3. Le procédé selon la revendication 2, dans lequel le copolymère séquencé radial asymmétrique comporte de 8 à 20 bras au total et le rapport des bras de copolymère séquencé i) aux bras de polymère dioléfinique conjugué ii) se situe dans la gamme de 3:1 à 1:3.

4. Le procédé de la revendication 1, 2 ou 3 dans lequel ledit hydrocarbone aromatique monoalcénylé est le styrène.

5. Le procédé de l'une quelconque des revendications précédentes, dans lequel ladite séquence polymère d'une dioléfine conjuguée est une séquence de polybutadiène ou de polystyrène.

6. Le procédé de l'une quelconque des revendications précédentes, dans lequel ledit polymère dioléfinique conjugué est un homopolymère du butadiène ou d'isoprène.

7. Le procédé de l'une quelconque des revendications précédentes, dans lequel la séquence de polymère à base d'hydrocarbone aromatique monoalcénylé présente un poids moléculaire moyen en poids se situant dans la gamme de 2.000 à 50.000, les séquences de polymère dioléfinique conjugué ont un poids moléculaire moyen en poids se situant dans la gamme de 5.000 à 150.000, et le polymère dioléfine conjugué présente un poids moléculaire moyen en poids se situant dans la gamme de 5.000 à 150.000.

8. Le procédé de l'une quelconque des revendications précédentes, dans lequel le copolymère séquencé radial asymmétrique possède un poids moléculaire moyen en poids se situant dans la gamme de 750.000 à 1.800.000.

9. Le procédé de l'une quelconque des revendications précédentes, dans lequel le copolymère séquencé radial asymmétrique est vulcanisé au soufre.

10. La composition de bitume de l'une quelconque des revendications précédentes, dans laquelle le copolymère séquencé radial asymmétrique est présent dans la composition de bitume selon une concentration se situant dans la gamme de 1 à 12 parties en poids, pour 100 parties en poids de bitume.

11. Un procédé pour la préparation d'une composition de béton asphaltique, procédé dans lequel on mélange de 4 à 10% en poids d'une composition de bitume préparée selon le procédé de l'une quelconque des revendications précédentes, avec de 90 à 96% en poids d'aggrégat.